# EUROPEAN PATENT APPLICATION

(11) **EP 4 403 960 A1**
(43) Date of publication of application: **24.07.2024**
(21) Application number: 23211585.7
(22) Date of filing: 22.11.2023
(51) Int. Cl.: G01S 19/21, G01S 19/22, G01S 19/35

(54) **A METHOD FOR COMBINING FEDERATED DIRECTIONAL GNSS INTEGRITY INFORMATION**

(30) Priority: 17.01.2023 US 202318097762
(71) Applicant: Rockwell Collins, Inc., Cedar Rapids, IA 52498 (US)
(72) Inventor: ANDERSON, David A., Walker, 52352-9763 (US); BISHOP, Jeffrey B., Solon, 52333-9473 (US); BOUSSELOT, Matthew D., Marion, 52302-5934 (US); BURCH, Douglas P., Cedar Rapids, 52402 (US)
(74) Representative: Dehns

(57) **Abstract**

A receiver system (100) is disclosed. The receiver system (100) may include an omnidirectional receiver (108) configured to receive an incoming signal, a directional receiver (110) configured to receive the incoming signal, and an integrity controller (102). The integrity controller (102) may be configured to determine an integrity of the incoming signal by synchronizing a clock of the omnidirectional receiver and a clock of the directional receiver, receiving an omnidirectional signal of the incoming signal, receiving a directional signal of the incoming signal, translating between a phase of the omnidirectional signal and a phase of the directional signal based on the synchronizing, ensuring a signal equivalency based on the translating, calculating an angle of arrival of the incoming signal based on carrier phase differences associated with the directional signal, and identifying the incoming signal as a trusted satellite signal based on a comparison of the angle of arrival with an expected angle of arrival.

## Description

### TECHNICAL FIELD

Embodiments of the inventive concepts disclosed herein are directed generally to signal authentication, and, more particularly, to angle of arrival (AOA) GNSS signal authentication.

### BACKGROUND

The authentication of Global Navigation Satellite System (GNSS) signals is a paramount factor in ensuring the precision and reliability of navigation and positioning systems. To ascertain the genuine signal, multiple versions of the signal must be scrutinized, with any interference or spoofed signals being filtered out. Angle-of-arrival is a widely-employed technique for authenticating GNSS signals, and while lower-cost Commercial-Off-The-Shelf (COTS) civil GNSS receivers are available that provide angle-of-arrival information using multiple antennas, they are not suitable for certified civil or qualified military applications due to their lack of certification. Moreover, the cost of modifying single antenna certified receivers to support angle-of-arrival is prohibitive. Consequently, there is a need for a system and method that can address these issues.

### SUMMARY

A receiver system is disclosed in accordance with one or more illustrative embodiments of the present disclosure. In one illustrative embodiment, the receiver system may include an omnidirectional receiver configured to receive an incoming signal, a directional receiver configured to receive the incoming signal, and an integrity controller. In another illustrative embodiment, the integrity controller may be configured to determine an integrity of the incoming signal by synchronizing a clock of the omnidirectional receiver and a clock of the directional receiver. In another illustrative embodiment, the integrity controller may be configured to receive an omnidirectional signal of the incoming signal via the omnidirectional receiver, receive a directional signal of the incoming signal via the directional receiver, translate between a phase of the omnidirectional signal and a phase of the directional signal based on the synchronizing, ensure a signal equivalency based on the translating, calculate an angle of arrival of the incoming signal based on carrier phase differences associated with the directional signal, and identify the incoming signal as a trusted satellite signal based on a comparison of the angle of arrival with an expected angle of arrival.

A method for determining an integrity of an incoming signal is disclosed in accordance with one or more illustrative embodiments of the present disclosure. In one illustrative embodiment, the method may include synchronizing a clock of an omnidirectional receiver and a clock of a directional receiver. In another illustrative embodiment, the method may include receiving, via the omnidirectional receiver, an omnidirectional signal of the incoming signal and receiving, via the directional receiver, a directional signal of the incoming signal. In another illustrative embodiment, the method may include translating between a phase of the omnidirectional signal and a phase of the directional signal based on the synchronizing and ensuring a signal equivalency based on the translating. In another illustrative embodiment, the signal equivalency may be indicative that the directional signal and the omnidirectional signal are a same signal. In another illustrative embodiment, the method may include calculating an angle of arrival of the incoming signal based on carrier phase differences associated with the directional signal. In another illustrative embodiment, the method may include identifying the incoming signal as a trusted satellite signal based on a comparison of the angle of arrival with an expected angle of arrival.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is a block diagram of a receiver system for determining signal integrity, in accordance with example embodiments of this disclosure.
FIG. 1B is a block diagram of a receiver system for determining signal integrity, in accordance with example embodiments of this disclosure.
FIG. 1C is a block diagram of a receiver system for determining signal integrity, in accordance with example embodiments of this disclosure.
FIG. 2 is a flowchart illustrating a method for determining signal integrity, in accordance with example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

Broadly speaking, the present disclosure is directed to a receiver system and method designed to determine signal integrity with a high degree of precision. By utilizing the signals of both a certified omnidirectional receiver, known for its superior integrity, and a directional receiver (e.g., a commercially available directional receiver of a more economical variety), the receiver system is capable of authenticating GNSS signals with a level of trustworthiness that exceeds that which could be achieved through the use of either receiver alone. This novel approach allows for the attainment of a high level of GNSS authentication without the need for a costly certified directional receiver, thereby providing a cost-effective solution for ensuring the reliability and accuracy of navigation and positioning systems.

For purposes of the present disclosure "relatively high integrity", "certified", and the like include, but are not necessarily limited to, testing against a known reference signal, benchmarking against other receivers, testing under controlled conditions, verifying compliance with industry standards, conducting field testing, and/or the like. For example, testing against a known reference signal may involves comparing the accuracy of a receiver's measurements to a known reference signal to ensure that it is able to accurately receive and process the signal. Benchmarking against other receivers involves comparing the accuracy of a receiver's measurements to those of other receivers under similar conditions to determine its performance relative to other devices. Testing under controlled conditions, such as in a laboratory or other controlled environment, ensures that a receiver performs consistently and accurately under a variety of different conditions. Verifying compliance with industry standards involves ensuring that a receiver meets the specifications and standards set forth by regulatory bodies or trade organizations. Conducting field testing involves testing a receiver in real-world conditions to ensure that it performs as expected under a variety of different conditions and scenarios. By using these methods, it is possible to certify receivers to have relatively high integrity and determine their level of trustworthiness and reliability with a high degree of precision.

For purposes of the present disclosure "relatively high integrity", "configured to be certified" and the like includes, but is not limited to, a receiver system that is equipped with a controller (e.g., controller 102) for storing a known reference signal, benchmarking against other receivers, testing under controlled conditions, verifying compliance with industry standards, and/or conducting field testing. In embodiments, the receiver system is equipped with a calibration system that allows for the receiver to be tested against a known reference signal, benchmarked against other receivers, tested under controlled conditions, and/or verified for compliance with industry standards.

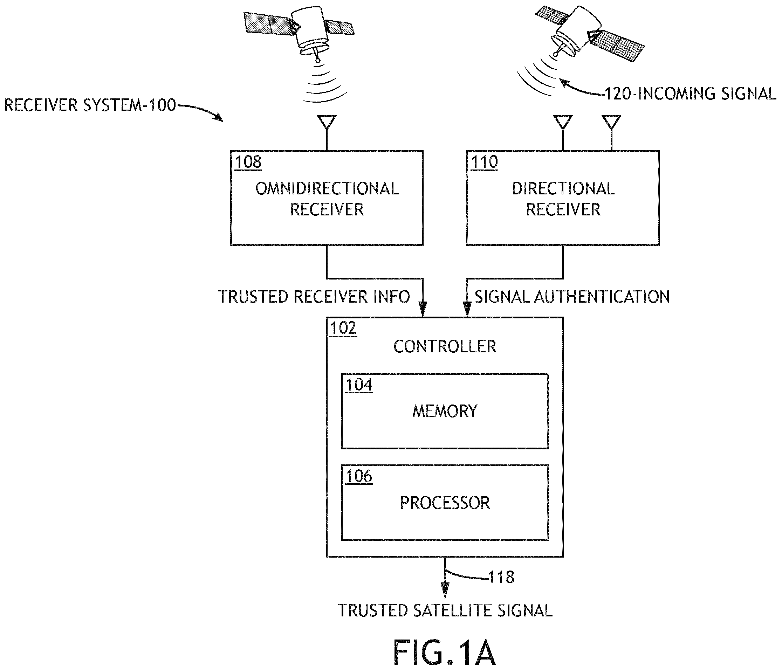

Referring to FIG. 1A, a receiver system 100 is illustrated in accordance with one or more embodiments of this disclosure. The receiver system 100 may include an omnidirectional receiver 108 and a directional receiver 110. The receiver system 100 may include a controller 102 including one or more processors 106. The controller 102 may be configured to execute a set of program instructions stored in a memory 104. The set of program instructions may be configured to cause the one or more processors 106 to determine an integrity of an incoming signal 120.

In embodiments, as shown, the antenna of the omnidirectional receiver 108 is separate from (i.e., different, mutually exclusive from) the antennas of the directional receiver 110. However, in other embodiments, although not necessarily shown, the omnidirectional receiver 108 and the directional receiver 110 share a common antenna. For example, the directional receiver 110 may be configured to utilize signals received by the omnidirectional receiver antenna and combine such signals with one or more signals from other antennas to achieve a directional antenna functionality as described herein. In this regard, a performance of the directional antenna 110 may be improved by leveraging a shared antenna.

In embodiments, controller 102 is generally any controller in any configuration. For example, the controller 102 may be an integrity controller processor configured to authenticate an incoming signal 120 and/or translate between phases of the omnidirectional receiver 108 and the directional receiver 110. In embodiments, the integrity controller 102 may be certified. The controller 102 may, as shown, be a controller external to the omnidirectional receiver 108 and the directional receiver 110. However, alternatively and/or additionally, the controller 102 may be a portion of (e.g., embedded within, share a common processor and/or memory, and/or the like) within the omnidirectional receiver 108 and/or the directional receiver 110. In this regard, the controller 102 may be one or more controllers 102 in one or more locations and configured to perform one or more steps as described in the present disclosure.

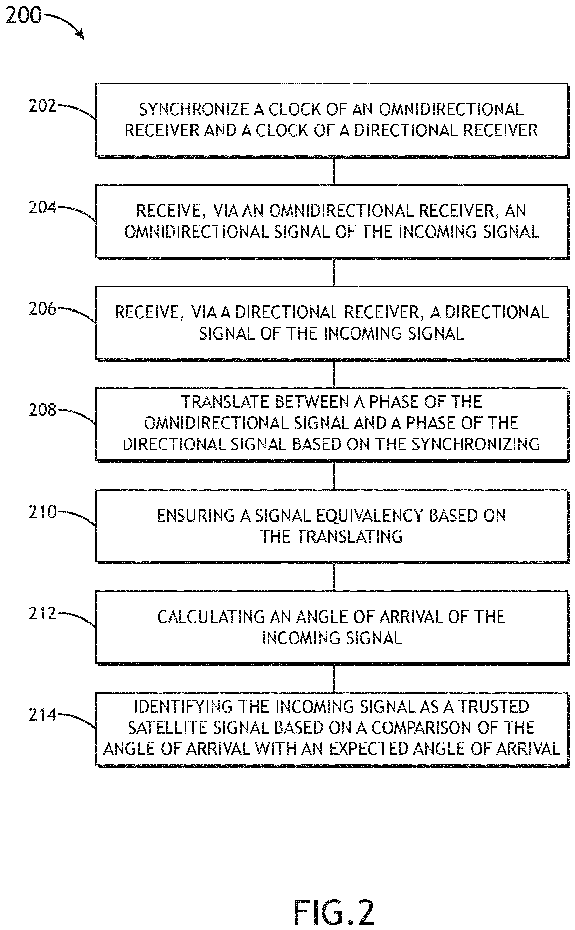

Referring to FIG. 2, a method 200 for determining an integrity of an incoming signal 120 is illustrated in accordance with one or more embodiments of this disclosure. Additionally, for example, some embodiments may include performing one or more instances of the method 200 iteratively, concurrently, and/or sequentially. Additionally, for example, at least some of the steps of the method 200 may be performed in parallel, concurrently. The method 200 is performed on a controller 102 and/or one or more other controllers.

A step 202 includes synchronizing a clock of the omnidirectional receiver 108 and a clock of the directional receiver 110. Controller 102 may be configured to perform a synchronization between signals received from the omnidirectional receiver 108 and the directional receiver 110 using time synchronization methods disclosed herein or known in the art. Methods for synchronizing signals of clocks include, but are not limited to, phase-locked loops (PLLs), digital phase-locked loops (DPLLs), and/or other methods.

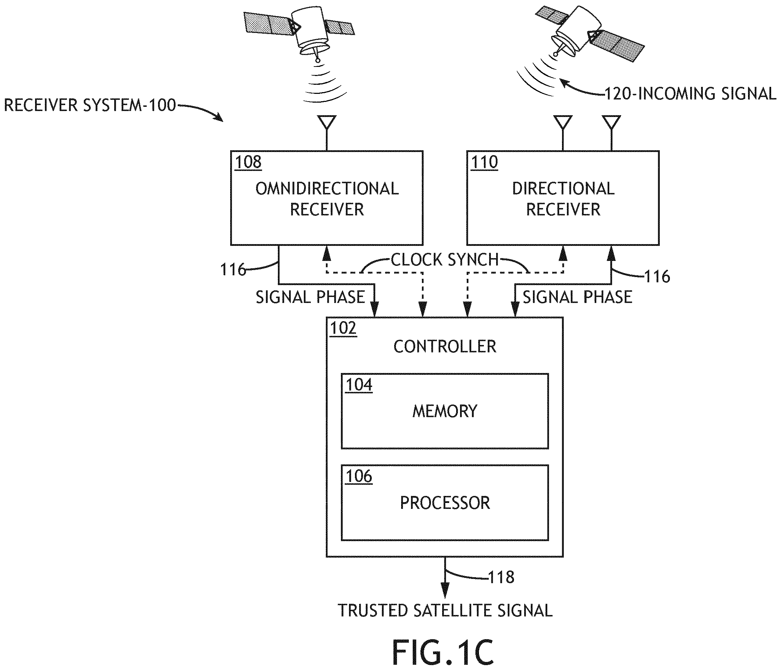

Referring to FIG. 1C, a receiver system 100 is illustrated in accordance with one or more embodiments of this disclosure utilizing a time synchronization process of step 202.

In embodiments, the receiver system 100 includes a timing synchronization subsystem (not shown) configured to identify and synchronize timing between the omnidirectional receiver 108 and the directional receiver 110. This can help reduce errors caused by temporal misalignments between the received signals.

A step 204 includes receiving, via the omnidirectional receiver 108, an omnidirectional signal of the incoming signal 120. The omnidirectional signal may be a signal received by the omnidirectional receiver 108 from any direction. At least initially, the receiver system 100 does not necessarily know whether the omnidirectional signal is a trusted signal.

In embodiments, as described further below in step 206, receiving a directional signal is based on a tracking of the directional signal. The omnidirectional signal, being certified and possessing a high level of integrity, may be utilized to locate and/or track the same signal using the directional receiver 110. As such, the same signal may be tracked by both receivers 108, 110.

The tracking of the directional signal may be based on phase data 114 derived from the omnidirectional signal. Phase data 114 may include, but is not limited to, an absolute phase, a frequency, a code type, pseudorandom noise (PRN) identifier, and/or the like. Typically, precise clock synchronization is needed to fully define a signal's absolute phase. In embodiments, the controller 102 is configured to track the directional signal based on the phase data 114. In this way, in embodiments, a certified omnidirectional signal confers trustworthiness to the tracking of the directional signal, obviating the need for a costly certified directional receiver while providing a higher level of GNSS authentication than either receiver could individually achieve.

As just described, a step 206 includes receiving, via the directional receiver 110, a directional signal of the incoming signal 120. The directional signal is a signal received by the directional receiver 110 from a particular direction. The directional signal may be received using any method known in the art, such as, but not limited to, phased array antenna methodologies for beam steering, null steering, and/or the like.

In embodiments, the direction receiver 110 is configured to continuously acquire and track the incoming signal 120. The omnidirectional receiver 108 may be equipped with an acquisition and tracking system configured to acquire and track the signal based on the phase data 114. The acquisition and tracking system may use various methods to acquire and track the signal, such as, but not limited to, code phase tracking, frequency tracking, and/or Doppler tracking.

A step 208 includes translating between a phase of the omnidirectional signal and a phase of the directional signal.

In embodiments, this translation is conceptually determined through a function that accounts for the synchronization (e.g., synchronization of step 202) and the known distance between the signals, and also considers any differences in the timing of the incoming signal's receipt by the receivers.

For example, the translation may be based on a known distance between the omnidirectional receiver 108 and the directional receiver 110, as well as a value that is representative of the speed of the signal (e.g., the speed of an RF signal in ambient air). Additionally, other data such as the known orientation of the receiver system 100 and an AOA of the incoming signal 120 may be utilized in the translation process. For example, the AOA of the incoming signal may be calculated in a previous iterative cycle of method 200 and used in a feedforward step to improve the translation of phase. By way of another example, step 212 is performed before step 208 to improve the accuracy of step 208.

Consider a scenario where the omnidirectional receiver 108 and the directional receiver 110 are positioned 10 cm apart. In this case, the known distance between the two receivers is 10 cm. When the incoming signal 120 is received by the omnidirectional receiver 108, it may be slightly out of phase with the signal received by the directional receiver 110 due to the difference in distance between the two receivers. The controller 102 is programmed to translate between the phase of the omnidirectional signal and the phase of the directional signal based on the known distance between the receivers and a constant representative of the speed of the signal.

For example, if the signal travels at a speed of 299,792,458 meters per second (the speed of light in a vacuum), the controller 102 can use this constant to calculate the time it took for the signal to travel the 10 cm distance between the receivers. This time difference can then be used to adjust the phase of the directional signal to match the phase of the omnidirectional signal, allowing for more accurate comparison of the omnidirectional signal to ensure it is the same signal as the directional signal.

A step 210 includes ensuring a signal equivalency based on the translating. The signal equivalency may indicate that the directional signal and the omnidirectional signal are the same signal (i.e., that each signal is the incoming signal 120). In other words, the signal equivalency may serve to confirm that two distinct signals are not being compared. For example, a non-certified COTS receiver may be more prone to being fooled by interference signals or itself may be compromised (e.g., faulty or configured to generate false/adverse signals). Confirming the signal equivalency with the omnidirectional receiver 108 ensures that the directional signal meets at least some standards associated with the omnidirectional receiver. In this regard, the high integrity (e.g., certification) of the omnidirectional receiver 108 may, in a sense, be "passed" on to the directional receiver 110 by confirming the same signal is being examined.

Ensuring a signal equivalency may include comparing differences between the signals. For example, but not limited to, a magnitude, phase, frequency, PRN, code type, and the like may be compared and if the signals are the same and/or any differences are below a threshold (e.g., within 10%, within 1%, and/or the like), then the signal equivalency may be ensured.

A step 212 includes calculating an AOA 116 of the incoming signal 120 based on carrier phase differences associated with the directional signal. The AOA corresponds to the angle of the incoming signal 120 as received by the directional receiver 110. The AOA may include an azimuth and/or elevation angle.

In embodiments, calculating the AOA 116 in step 212 may include using any method known in the art, such as, but not limited to, triangulation, Time Difference of Arrival (TDOA), Frequency Difference of Arrival (FDOA), beam steering, null steering, and/or the like. For example, step 212 may include calculating a difference in phase between two or more antennas of the directional receiver 110. For example, the directional receiver 110 may be configured to calculate a difference in phase between the antennas. For example, the controller 102 may be configured to calculate a difference in phase between the antennas.

A step 214 includes identifying the incoming signal 120 as a trusted satellite signal 118 based on a comparison of the AOA 116 with an expected AOA. The expected AOA may be determined based on a satellite location and a location of the receiver system 100. The expected AOA may be determined using any method known in the art, such as, based on calculating an expected location of a GNSS satellite using known satellite orbits and time of day, and comparing the expected location to a known orientation and position (e.g., latitude and longitude) of the receiver system 100 at a particular point in time. Other methods for determining expected AOA include receiving ephemeris data where a satellite broadcasts its position in orbit, least squares methods to fit a model to measured satellite positions and determine the expected position, Kalman filtering techniques to estimate the position of a satellite by combining noisy measurements with a mathematical model of the satellite's motion, and the like.

Consider a scenario where the signal source (e.g., satellite) has an altitude angle of 45 degrees along an azimuth angle (e.g., 67 degrees) and the orientation of the receiver system 100 is tilted 5 degrees downwards (e.g., below the horizon) along the same azimuth angle. The controller 102 may use this information to calculate the expected AOA of the incoming signal 120 to be equal to 50 degrees of positive altitude angle.

In embodiments, if the AOA 116 is within a predetermined threshold of the expected AOA, then the incoming signal 120 may be identified as a trusted satellite signal 118. For example, the predetermined threshold may be within 10%, within 1%, and/or the like. If the AOA 116 is not within the predetermined threshold of the expected AOA, then the incoming signal 120 may not be identified as a trusted satellite signal 118.

In embodiments, the incoming signal 120 is any signal. For example, the incoming signal 120 may be a Global Navigation Satellite System (GNSS) signal. For example, a GNSS signal may be a signal from a GNSS such as the Global Positioning System (GPS), Galileo, GLONASS, BeiDou, or the like. By way of another example, the GNSS signal may include signals from more than one satellite constellation.

In embodiments, the directional receiver 110 comprises a plurality of antennas. For example, the directional receiver 110 may include two or more antennas, such as two, three, four, ten, a thousand, or more antennas. The antennas may be arranged in any configuration known in the art, such as, but not limited to, a linear array, a circular array, a planar array, and/or the like. For instance, the directional receiver 110 may be an electronically scanned array (ESA) receiver.

In embodiments, the omnidirectional receiver 108 is associated with a relatively high integrity compared to an integrity of the directional receiver 110. For example, the omnidirectional receiver 108 may be a certified receiver, such as a military and/or civilian certified receiver, configured to have undergone rigorous testing and/or certification. In this regard, the omnidirectional receiver 108 may be associated with a relatively high integrity compared to an integrity of the directional receiver 110, which may be a lower cost commercial-off-the-shelf directional receiver.

In embodiments, the directional receiver 110 is configured to detect and reject interference signals. Interference signals may be electromagnetic or radio frequency signals that interfere with the intended signal and degrade the signal quality. The directional receiver 110 may be configured to reject interference signals by analyzing the characteristics of the incoming signals and detecting interference signals that do not match the expected characteristics of the incoming signal 120.

In embodiments, the omnidirectional receiver 108 is configured to process the incoming signal 120 with multiple correlators. Multiple correlators can process the same incoming signal 120 in parallel, allowing for faster and more reliable signal processing. The multiple correlators may also be configured to detect, track, and decode multiple signals in the same frequency band, which can improve the performance of the receiver system 100 and reduce errors caused by interference signals.

In embodiments, the receiver system 100 includes a filter configured to filter out noise and/or interference signals. The filter may be configured to filter out unwanted signals and/or noise, such as, but not limited to, signals from broadcast radio, cellular telephone networks, and/or other sources of noise. The filter may be configured to pass signals at one or more desired frequencies and reject signals at undesired frequencies.

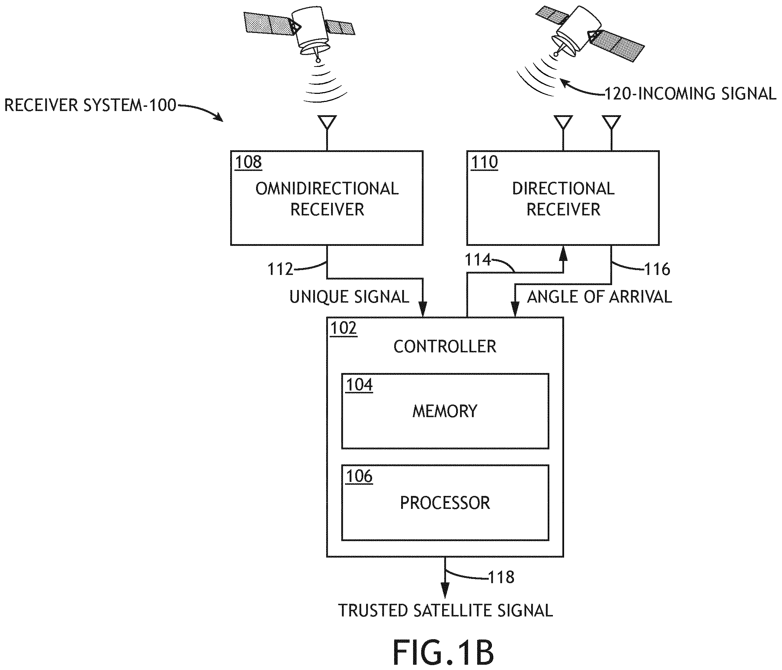

Referring to FIG. 1B, a receiver system 100 is illustrated in accordance with one or more embodiments of this disclosure.

In embodiments, data 112 from omnidirectional receiver 108 is received. For example, data 112 may include the omnidirectional signal, a portion thereof, and/or data derived therefrom. For example, data 112 may include phase data 114. As previously noted in reference to step 204, phase data 114 may be, but is not required to be, data derived from the omnidirectional signal. In this regard, information from the omnidirectional signal may be used to find and/or track the same signal using the directional receiver 110. As shown, the AOA 116 may be received. However, receiving the AOA as shown is merely a conceptual example and is not necessarily limiting, and the directional signal itself may, alternatively, be received first and then the AOA 116 calculated thereafter using controller 102.

In embodiments, the receiver system 100 includes a compensation system configured to adjust for multipath signals. Multipath signals may be caused by signals reflecting off of surfaces and combining with the direct signals. The compensation system may be configured to detect multiple signals at the same frequency and adjust for the multipath signals in order to ensure an accurate AOA 116 of the incoming signal 120.

In embodiments, the receiver system 100 includes a signal processor configured to process the incoming signal 120. The signal processor may be configured to process the signal in order to extract useful information from the signal. The signal processor may be configured to decode the signal and/or extract navigation data from the incoming signal 120.

In embodiments, the receiver system 100 includes a navigation processor configured to process the navigation data extracted from the incoming signal 120. The navigation processor may be configured to process the navigation data in order to calculate the position, velocity, and/or time of the receiver system 100. In embodiments, the method 200 may include updating a navigation (e.g., changing course based on new GPS coordinates of the incoming signal 120) of an aircraft based on the incoming signal 120).

In embodiments, the receiver system 100 includes a data processor configured to process the data extracted from the incoming signal 120. The data processor may be configured to process the data in order to extract useful information from the data. The data processor may be configured to decode the data and/or extract navigation data from the data. The data processor may be configured to use various methods to decode the data, such as, but not limited to, error correction coding, forward error correction, and/or other methods.

The signal processor, navigation processor, and/or data processor may include (or be) the controller 102, another controller, or the like.

In embodiments, the receiver system 100 is integrated with the omnidirectional receiver 108, and/or designed with the antennas of the omnidirectional receiver 108. Embodiments herein provide for retrofitting existing receiver systems and/or designing new systems using a pre-existing design of a receiver system.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A receiver system (100) comprising:
an omnidirectional receiver (108) configured to receive an incoming signal;
a directional receiver (110) configured to receive the incoming signal; and
an integrity controller (102), wherein the integrity controller (102) is configured to:
determine an integrity of the incoming signal by:
synchronizing a clock of the omnidirectional receiver and a clock of the directional receiver;
receiving, via the omnidirectional receiver, an omnidirectional signal of the incoming signal;
receiving, via the directional receiver, a directional signal of the incoming signal;
translating between a phase of the omnidirectional signal and a phase of the directional signal based on the synchronizing;
ensuring a signal equivalency based on the translating, wherein the signal equivalency is indicative that the directional signal and the omnidirectional signal are a same signal;
calculating an angle of arrival of the incoming signal based on carrier phase differences associated with the directional signal; and
identifying the incoming signal as a trusted satellite signal based on a comparison of the angle of arrival with an expected angle of arrival.

2. The receiver system of claim 1, wherein the incoming signal includes a GNSS signal.

3. The receiver system of claim 1 or 2, wherein the directional receiver (110) comprises a plurality of antennas.

4. The receiver system of any preceding claim, wherein the integrity controller (102) is configured to determine an expected angle of arrival of the trusted satellite signal based on a satellite location and a location of the receiver system.

5. The receiver system of any preceding claim, wherein the omnidirectional receiver (108) is configured to be associated with a relatively high integrity compared to an integrity of the directional receiver.

6. The receiver system of any preceding claim, wherein the translating is based on a known distance between the omnidirectional receiver and the directional receiver.

7. The receiver system of any preceding claim, wherein the receiving the directional signal is based on a tracking of the directional signal, wherein the tracking is based on phase data derived from the omnidirectional signal.

8. The receiver system of any preceding claim, wherein the omnidirectional receiver (108) is a certified receiver.

9. The receiver system of any preceding claim, wherein the integrity controller (102) is configured to extract navigation data from the incoming signal, and preferably wherein the integrity controller is configured to process the navigation data extracted from the incoming signal.

10. A method for determining an integrity of an incoming signal, the method comprising:
synchronizing a clock of an omnidirectional receiver and a clock of a directional receiver;
receiving, via the omnidirectional receiver, an omnidirectional signal of the incoming signal;
receiving, via the directional receiver, a directional signal of the incoming signal;
translating between a phase of the omnidirectional signal and a phase of the directional signal based on the synchronizing;
ensuring a signal equivalency based on the translating, wherein the signal equivalency is indicative that the directional signal and the omnidirectional signal are a same signal;
calculating an angle of arrival of the incoming signal based on carrier phase differences associated with the directional signal; and
identifying the incoming signal as a trusted satellite signal based on a comparison of the angle of arrival with an expected angle of arrival.

11. The method of Claim 10, wherein the incoming signal includes a GNSS signal.

12. The method of Claim 10 or 11, wherein the directional receiver comprises a plurality of antennas.

13. The method of any of Claims 10-12 further comprising determining the expected angle of arrival based on a satellite location and a location of the receiver system.

14. The method of any of Claims 10-13, wherein the omnidirectional receiver is associated with a relatively high integrity compared to an integrity of the directional receiver; and/or
wherein the translating is based on a known distance between the omnidirectional receiver and the directional receiver; and/or
wherein the receiving the directional signal is based on a tracking of the directional signal, wherein the tracking is based on phase data derived from the omnidirectional signal; and/or
wherein the omnidirectional receiver is a certified receiver.

15. The method of any of claims 10-14 further comprising extracting navigation data from the incoming signal, and preferably further comprising extracting processing the navigation data extracted from the incoming signal.
